Europäisches Patentamt

(19) European Patent Office

Office européen des brevets

(11) Veröffentlichungsnummer: **0 045 001**
**B1**

(12) **EUROPÄISCHE PATENTSCHRIFT**

(45) Veröffentlichungstag der Patentschrift:
**02.05.85**

(21) Anmeldenummer: **81105472.5**

(22) Anmeldetag: **13.07.81**

(51) Int. Cl.⁴: **H 01 H 9/02**, H 01 H 71/02,
H 01 H 83/02, H 01 R 13/713,
H 02 G 1/18

(54) **Steckdosenanordnung mit Fehlerstromschutzschalter.**

(30) Priorität: **25.07.80 DE 3028326**

(43) Veröffentlichungstag der Anmeldung:
**03.02.82 Patentblatt 82/5**

(45) Bekanntmachung des Hinweises auf die Patenterteilung:
**02.05.85 Patentblatt 85/18**

(84) Benannte Vertragsstaaten:
**AT BE DE FR GB IT NL SE**

(56) Entgegenhaltungen:
**US - A - 3 663 864**
**US - A - 3 813 579**

**DER ELEKTROMEISTER + DEUTSCHES
ELEKTROHANDWERK, Band 22, 1976, München, Seite
1493**

(73) Patentinhaber: **Siemens Aktiengesellschaft, Berlin und
München Wittelsbacherplatz 2, D-8000 München 2 (DE)**

(72) Erfinder: **Galli, Anton, Pittersberg Nr. 39,
D-8451 Ebermannsdorf (DE)**
Erfinder: **Weissberger, Günther, Giselastrasse 11,
D-8420 Kelheim (DE)**

**Beschreibung**

Die Erfindung bezieht sich auf eine Steckdosenanordnung, bei der Zuleitungen zu der/den Steckdose(n) durch einen mit der/den Steckdose(n) in demselben Gehäuse untergebrachten Fehlerstromschutzschalter gesichert sind, wobei das Gehäuse zumindest an einer Seitenwand einen als Steckdosenabdeckung ausgebildeten Einsatzteil formschlüssig nach Art von Nut und Feder aufnimmt, dessen Frontfläche zur Stellfläche der Anordnung schräggestellt ist, und wobei in dem Gehäuse durch Zwischenwände Kammern gebildet sind.

Bei einer derartigen bekannten Anordnung (US-A-3 663 864) ist an einem Kabelende ein Gehäuse angeordnet, das an einer nach unten schräg nach vorn vorlaufenden Fläche mehrere ungeschützte Steckeraufnahmen bildet. In Kammern, die durch Zwischenwände gebildet werden, sind die Bauteile von Fehlerstromschutzschaltern untergebracht. Hierbei ist das Wiedereinschalten der Fehlerstromschutzschalter entweder mühsam oder die Bauteile der Fehlerstromschutzschalter sind nicht spritzwassergeschützt unterzubringen. Eine solche Steckdosenanordnung erfordert auch besondere Anpassungsmassnahmen, um die Bauelemente eines handelsüblichen Fehlerstromschutzschalters in der Steckdosenanordnung unterzubringen.

Der Erfindung liegt die Aufgabe zugrunde, eine Steckdosenanordnung der eingangs geschilderten Art so weiter zu entwickeln, dass sie handlich, robust und betriebssicher ist und sich auch leicht fertigen und montieren lässt.

Die Lösung der geschilderten Aufgabe besteht darin, dass das Gehäuse im wesentlichen die Form eines Würfels aufweist, dessen normalerweise der Stellfläche der Steckdosenanordnung zugewandte Seite als offener überstehender Rand ausgebildet ist und einen Stauraum für ein Anschlusskabel bildet, dass in dem Gehäuse von der genannten Stellfläche aus gesehen über den Stauraum eine Abdeckung liegt, die mit einem Ansatz am Einsatzteil formschlüssig nach Art von Nut und Feder ineinandergreifend derart angeordnet ist, dass Abdeckung und Einsatzteil den Steckdosensockel und Fehlerstromschutzschalter aufnehmenden, oben liegenden Geräteraum des Gehäuses vom Stauraum abtrennen, dass an die Abdeckung eine zwischen Fehlerstromschutzschalter und Steckdosensockel liegende Trennwand angeformt ist, dass der Fehlerstromschutzschalter zwecks Bedienung vom Stauraum her durch einen in der Abdeckung angeordneten Klappdeckel zugänglich ist und dass die den Fehlerstromschutzschalter zugewandten Seiten der Wände des Gehäuses, der Trennwand und/oder der Abdeckung so auf die Abmessungen des Fehlerstromschutzschalters abgestimmt sind, dass er im Passsitz federnd gehalten ist.

Dadurch lässt sich der hohe Schutzpegel von empfindlichen Fehlerstromschutzschaltern, beispielsweise mit einem Nennfehlerstrom von 10 mA, nutzen. Insbesondere können hierbei handelsübliche Fehlerstromschutzschalter bei der Herstellung der Steckdosenanordnung ohne besondere Anpassungsmassnahmen eingesetzt werden. Die Steckdosenanordnung kann vor allem in Altanlagen mit vorhandener Installation sowie im Freizeitbereich zusätzliche Sicherheit bei Komfort bieten. Durch die Kubusform wird der Raum gut genutzt, so dass ein verhältnismässig kleines Gerät erzielt wird und durch die besondere Anordnung des Kabelstauraums wird die bedienungsfreundliche Handhabung und die Sicherheit für die Anschlussleitung gefördert.

Das formschlüssige Zusammenfügen von Einsatzteil und Abdeckung, die gemeinsam formschlüssig in das Gehäuse eingesetzt werden können, ergibt ein einfach zu montierendes und dichtes Gehäuse. Ausserdem liegt der Fehlerstromschutzschalter auch dann vor witterungsbedingten Störeinflüssen und solchen der Handhabung geschützt untergebracht, wenn das Gerät mit dem offenen Rand nach oben hingestellt wird.

Dadurch, dass die Abdeckung neben dem Platz für den Fehlerstromschutzschalter eine quer zur Fläche der Abdeckung stehende Trennwand bildet, die formschlüssig in das Gehäuse eingepasst ist, und der Platz für den Fehlerstromschutzschalter als Klappdeckel ausgebildet ist, wird der Fehlerstromschutzschalter einerseits leicht zugänglich und andererseits in allen Aufstellungslagen des Gerätes vor Störeinflüssen geschützt. Dadurch wird wieder die Sicherheit des Gerätes weiter gefördert. Die aus der Geräteabdeckung des Fehlerstromschutzschalters herausschauenden Bedienungselemente werden also durch den Klappdeckel abgedeckt.

Wenn das Einsatzteil hinsichtlich seiner Frontfläche von der Gehäuseoberseite aus zurückfluchtend schräggestellt ist, wird in der Hauptarbeitslage sichergestellt, dass die Steckdosen vor Feuchtigkeit und Schmutz geschützt sind und sich zugleich eine Griffmulde ergibt.

Eine Zugentlastung für eine Anschlussleitung kann in besonders einfacher Weise dadurch erzielt werden, dass im Anschlussbereich für den Fehlerstromschutzschalter in der Trennwand und in der Abdeckung Ausnehmungen ausgebildet sind, die zusammen einen Labyrinthpfad für die Anschlussleitung bilden. Dadurch kann das Kabel ohne zusätzliche Mittel bei geeigneter Bemessung der Ausnehmungen sicher festgeklemmt und die Anschlussstelle zugentlastet werden.

Für den Passsitz des Fehlerstromschutzschalters zwischen Trennwand und/oder Abdeckung mittels dünner Rippen eignen sich insbesondere Rippen aus Polypropylen. Dadurch wird ein besonders federnder Passsitz erzielt.

Es ist günstig, wenn das Einsatzteil hinsichtlich seiner Frontfläche um 10 bis 30° schräggestellt ist. Besonders vorteilhaft hinsichtlich Sicherheit und einer raumsparenden Anordnung der Steckdosensockel ist es, wenn das Einsatzteil um 15° schräggestellt ist. Hierbei weist die Frontfläche des Einsatzteils zur Hauptaufstellfläche.

Es fördert die Bedienungsfreundlichkeit, wenn der Klappdeckel aus durchsichtigem Material ausgebildet ist. Der Schaltzustand des Fehlerstromschutzschalters kann dann bei geschlossenem Klappdeckel jederzeit erkannt werden.

Ein montagefreundliches und leicht zu bedienendes Scharnier für den Klappdeckel erzielt man, wenn der Klappdeckel an zurückgesetzten Rändern angeformte Lagerzapfen aufweist, die zum Teil von einer Überdeckung mit Abstand überspannt sind. Die Abdeckung des Gehäuses bildet hierzu gabelförmige Aufnahmen für die Lagerzapfen, deren randseitiger Gabelarm im Ausmass der Dicke der Überdeckung am Klappdeckel verkürzt ist. Die Lagerzapfen sind dadurch toleranzausgleichend leicht federnd ausgebildet und dennoch abgedeckt. Am verkürzten Gabelarm kann in geöffneter Position der Klappdeckel bei montierter Abdeckung leicht eingesetzt werden.

Die Montage des Gerätes wird weiter erleichtert, wenn auf jedem Lagerzapfen eine Drehfeder mit entgegengesetzt wegstehenden Anschlagsenden aufgesetzt ist und jeweils ein Anschlagende am Klappdeckel und ein Anschlagende an der Abdeckung unter Vorspannung ansteht. Beim Einsetzen des Klappdeckels wird dann die richtige Federspannung von selbst eingestellt.

Die richtige Federspannung und besonders die Lage des Klappdeckels in geschlossenem Zustand wird sichergestellt, wenn zwischen Lagerzapfen und lagerseitigem Rand des Klappdeckels eine Rippe der Abdeckung eingreift, die sich vom Ende des Lagerzapfens bis zur Auflagestelle am Klappdeckel des Anschlagsendes der Drehfeder erstreckt. Es ist dann auch sichergestellt, dass sich das Anschlagende der Drehfeder, das sich am Klappdeckel abstützt, nicht zwischen Klappdeckel und benachbartem Rand der Abdeckung einklemmen kann. Allgemein bietet die Steckdosenanordnung eine für Laien angenehme Handhabung, da es im wesentlichen die Form eines Würfels aufweist, leicht zu bedienen und aufzustellen ist.

Die Erfindung soll anhand von der Zeichnung schematisch wiedergegebenen Ausführungsbeispielen näher erläutert werden:

In Fig. 1 ist die Steckdosenanordnung bei im wesentlichen würfelförmiger Ausbildung bei einem Schnitt senkrecht zur Hauptstellfläche wiedergegeben.

In Fig. 2 ist das Gerät nach Fig. 1 in Ansicht von unten dargestellt.

In Fig. 3 ist eine Ansicht nach Fig. 2 wiedergegeben, Gehäuse und Abdeckung sind jedoch entfernt. Eine Trennwand zwischen Fehlerstromschutzschalter und den zwei dargestellten Steckdosensockeln ist im Schnitt wiedergegeben.

In Fig. 4 ist ein Blick auf die Rückseite der Steckdosensockel dargestellt.

In Fig. 5 ist ein Klappdeckel, der in der Abdeckung an der Bedienseite des Fehlerstromschutzschalters eingesetzt ist, allein in Aufsicht wiedergegeben.

In Fig. 6 ist der Klappdeckel nach Fig. 5 in Seitenansicht dargestellt.

In Fig. 7 ist der Klappdeckel nach Fig. 5, nachdem man ihn auf seine Rückseite umgeklappt hat, teilweise im Schnitt, wiedergegeben.

In Fig. 8 ist ein in die abgebrochen wiedergegebene Abdeckung eingesetzter Klappdeckel im Längsschnitt dargestellt.

In Fig. 9 ist die Draufsicht, teilweise im Schnitt, auf eine Lagerstelle nach Fig. 8 wiedergegeben.

In Fig. 10 ist die Lagerstelle nach Fig. 8 bei weitgehend geöffnetem Klappdeckel, der abgebrochen wiedergegeben ist, dargestellt.

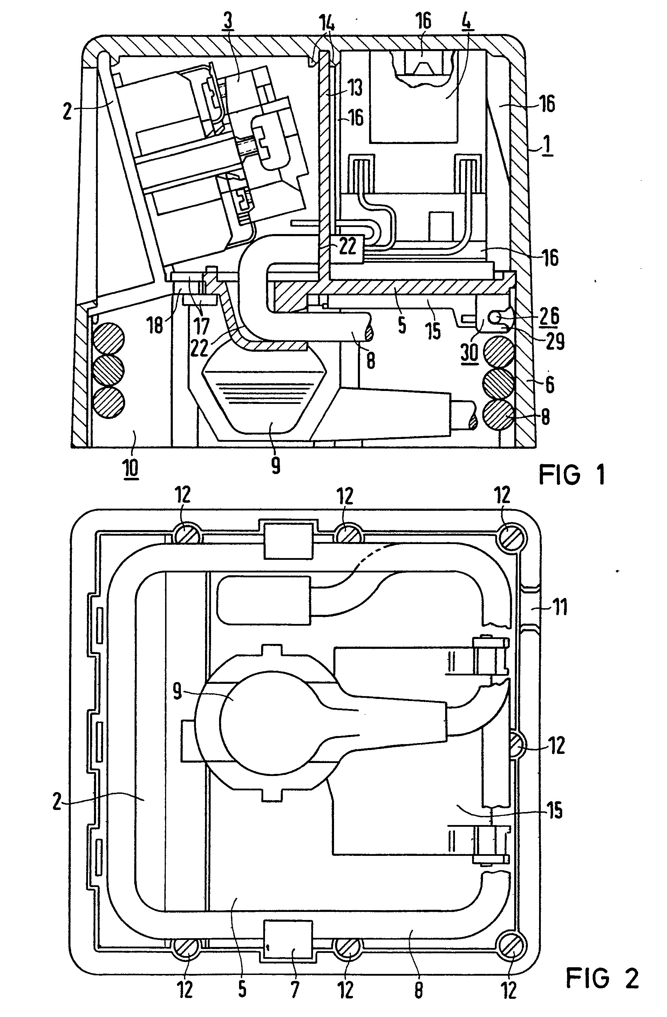

Die Steckdosenanordnung nach Fig. 1 weist in ihrem Gehäuse 1 zumindest in einer Seitenwand ein als Steckdosenabdeckung ausgebildetes Einsatzteil 2 auf, dessen Frontfläche zur Seitenwand schräggestellt ist, so dass sie zur Hauptstellfläche weist. Das Einsatzteil 2 ist mit einer in das Gehäuse formschlüssig einsetzbaren, den Geräteraum für Steckdosensockel 3 und Fehlerstromschutzschalter 4 abschliessenden Abdeckung 5 formschlüssig verbunden. Benachbart zum Geräteraum ist die Gehäusewand als Rand 6 vorgezogen und mit Haltenasen 7 (Fig. 2) versehen. Diese Haltenasen sind Stege mit vorstehenden Lappen, die die Anschlussleitung 8 im Kabelstauraum halten. Der Stecker 9 kann mit seinen Steckkontaktstiften in kontaktlose Steckkontaktaufnahmen eingesteckt und bedienungsfreundlich gehalten werden. Im Rand 6 ist nach Fig. 2 eine Ausnehmung 11 vorgesehen, die es ermöglicht, das Kabel 8 vom Stauraum 10 zu einer Anschlussstelle zu führen und das Gerät auf seinem Rand 6 in unveränderter Standlage zu halten. Es ist günstig, den oberen Bereich der Ausnehmung 11 so zulaufend eng auszubilden, dass das Kabel festgeklemmt wird, so dass das Kabel nicht herausfallen kann, wenn man das Gerät hinstellt. Das Kabel kann dann nicht zwischen Rand und Stellfläche gelangen.

Einsatzteil 2 und Abdeckung 5 werden mittels Schrauben 12 im Gehäuse 1 befestigt (Fig. 2).

Die Abdeckung 5 bildet neben dem Platz für den Fehlerstromschutzschalter 4 eine quer zur Fläche der Abdeckung stehende Trennwand 13. Sie ist zwischen Wülsten 14 formschlüssig in das Gehäuse 1 eingepasst. Der Raum für den Fehlerstromschutzschalter 4 liegt über einem Klappdeckel 15. Gehäuse 1 und Trennwand 13 sowie auch die Abdeckung 5 sind mittels dünner Rippen 16 so auf die Abmessungen des Fehlerstromschutzschalters 4 abgestimmt, dass er im Passsitz federnd gehalten ist. Als Werkstoff eignet sich insbesondere Polypropylen. Hierdurch werden Stösse wirkungsvoll gedämpft.

Wie aus Fig. 1 zu ersehen ist, ist das Einsatzteil 2 mit der Abdeckung 5 dadurch formschlüssig verbunden, dass sie nach Art von Nut 17 und Feder 18 ineinandergreifen.

Es ist günstig, das Einsatzteil 2 hinsichtlich seiner Frontfläche um 10 bis 30° schräg zu stellen, wie es aus Fig. 1 zu ersehen ist. Besonders vorteilhaft ist es, das Einsatzteil um 15° schräg zu stellen. Dadurch sind die Steckdosen 3 in der Hauptgebrauchslage gegen Witterungseinflüsse geschützt und die Steckdosensockel 3 können raumgünstig untergebracht werden.

Wenn der Klappdeckel 15 aus durchsichtigem Material ausgebildet ist, lässt sich der Betriebszustand des Fehlerstromschutzschalters 4 jederzeit kontrollieren, ohne dass der Klappdeckel 15 geöffnet zu werden braucht. Um das Scharnier 20 im geöffneten Zustand zu entlasten, ist es vorteilhaft, die Abmessungen so zu wählen, dass sich der Klappdeckel 15 am stirnseitigen Gehäuserand 6 abstützen kann.

Wie aus den Fig. 1 und 2 zu ersehen ist, ergibt sich ein gedrungener und gebrauchsgünstiger Aufbau dadurch, dass das Gehäuse im wesentlichen die Form eines Würfels aufweist. Die eine Seite des Würfels ist als offener überstehender Rand 6 ausgebildet. Auch die anderen Seiten dieses Würfels eignen sich als Auflageflächen. Trotzdem bleibt insbesondere der Fehlerstromschutzschalter 4 vor Störeinflüssen geschützt.

Im Anschlussbereich für den Fehlerstromschutzschalter 4 sind in der Trennwand 13 und in der Abdeckung 5 Ausnehmungen bzw. Durchführungen 22 ausgebildet, die zusammen einen Labyrinthpfad für die Anschlussleitung 8 bilden. Bei entsprechend enger Bemessung ergibt sich hierdurch eine sichere Zugentlastung für die Anschlussstellen des Kabels 8.

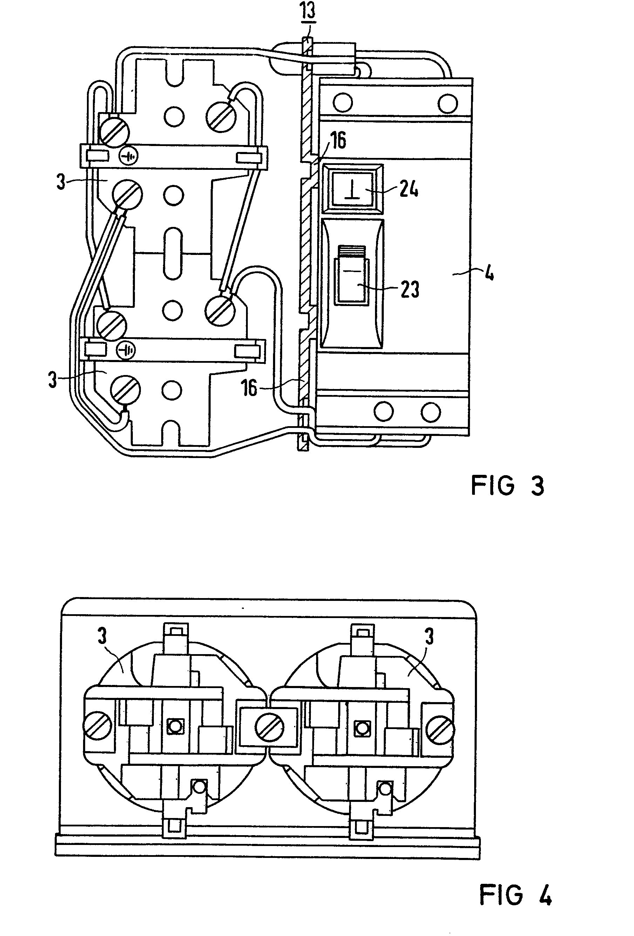

Nach Fig. 3 sind die federnden Rippen 16 in der Trennwand 13 als durchgedrückte Stege ausgebildet, wobei die ganze Trennwand mitfedert. Das Handbetätigungsorgan des Fehlerstromschutzschalters 4 ist mit 23 und die Prüftaste mit 24 bezeichnet.

In Fig. 4 ist die raumgünstige Anordnung von zwei Steckdosensockeln 3 veranschaulicht.

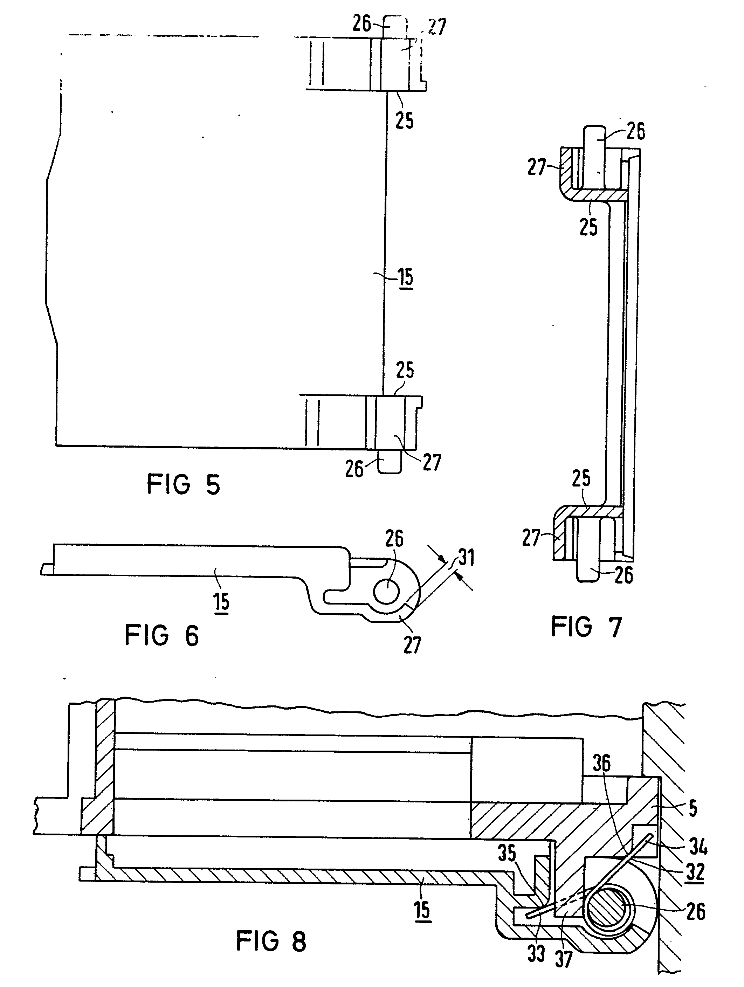

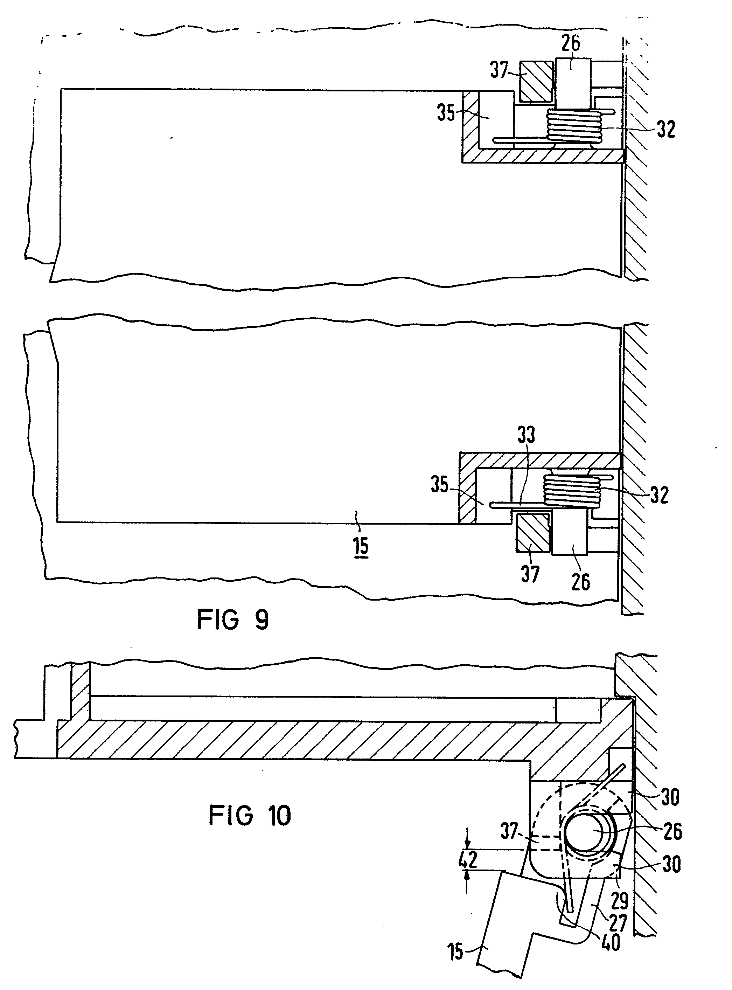

Der Klappdeckel 15 nach Fig. 5 weist an zurückgesetzten Rändern 25 – man vergleiche insbesondere Fig. 7 – angeformte Lagerzapfen 26 auf, die zum Teil von einer Überdeckung 27 mit Abstand überspannt sind. Die Abdeckung 5 des Gehäuses 1, nach Fig. 1, weist gabelförmige Aufnahmen 30 für die Lagerzapfen 26 auf, deren randseitiger Gabelarm 29 im Ausmass der Decke 31 der Überdeckung 27 verkürzt ist. Man vergleiche Fig. 6. Dadurch kann entsprechend Fig. 10 der Klappdeckel 15 unter einer Schwenkbewegung bis zur vollen Öffnung zum Montieren eingesetzt werden.

Auf jedem Lagerzapfen 26 ist nach Fig. 8 eine Drehfeder 32 mit entgegengesetzt wegstehenden Anschlagsenden 33 und 34 aufgesetzt, wobei ein Anschlagsende 33 am Klappdeckel 15 und ein Anschlagsende 34 an der Abdeckung 5 an der Stufe 35 bzw. 36 ansteht. Wenn man den Klappdeckel 15 einsetzt, spannt sich dadurch die Drehfeder 32 von selbst.

Zwischen Lagerzapfen 26 und lagerseitigem Rand des Klappdeckels 15 greift nach Fig. 9 eine Rippe 37 der Abdeckung 5 ein. Sie erstreckt sich vom Ende des Lagerzapfens 26 bis zur Auflagestelle 35 am Klappdeckel 15 des Anschlagsendes 33 der Drehfeder 32. Diese Rippe 37 hält die Lage des Klappdeckels 15 in der Gabel 30 – man vergleiche Fig. 10 und Fig. 1 – fest. Sie verhindert ausserdem bei Erstreckung bis oberhalb der Mittellinie des Zapfens 26, dass sich das Anschlagsende 33 der Drehfeder 32 zwischen Klappdeckel 15 und Abdeckung 5 festklemmen könnte – man vergleiche Fig. 9.

Die Steckdosenanordnung lässt sich leicht montieren, indem Einsatzteil 2 mit angebrachtem Steckdosensockel und Abdeckung 5 formschlüssig zusammengesetzt werden und bei eingelegtem Fehlerstromschutzschalter 4 nach Verdrahtung in das Gehäuse 1 eingeschoben werden. Anschliessend wird diese Baugruppe durch Schrauben 12 festgehalten. Zuvor ist noch der Klappdeckel 15 bei aufgesetzten Drehfedern 32 in die gabelförmige Aufnahme 30 einzusetzen.

Zum Montieren ist der Klappdeckel 15 dabei so weit zu öffnen, im Ausführungsbeispiel ca. 75°, dass der Absatz 40 des Klappdeckels 15 über die Rippe 37 hinwegkommt. Man vergleiche den Abstand 42 nach Fig. 10. Die Lagerzapfen 26 des Klappdeckels 15 werden also in die gabelförmige Aufnahme 30 dann eingeschoben, wobei sich die Anschlagsenden 33 und 34 der Drehfeder 32 gegen die Stufen 35 des Klappdeckels 15 und 36 der Abdeckung 5 anlegen und gespannt werden. Nachdem der Deckel geschlossen ist, verhindert die Rippe 37 zusammen mit den Stufen 35 und 36, dass sich die Drehfeder 32 wieder entspannen könnte. Der Klappdeckel 15 kann also schon bei der Vormontage nicht mehr aus der Abdeckung 5 herausrutschen.

## Patentansprüche

1. Steckdosenanordnung, bei der die Zuleitungen zu der/den Steckdose(n) durch einen mit der/den Steckdose(n) in demselben Gehäuse untergebrachten Fehlerstromschutzschalter (4) gesichert sind, wobei das Gehäuse (1) zumindest an einer Seitenwand einen als Steckdosenabdeckung ausgebildeten Einsatzteil (2) formschlüssig nach Art von Nut und Feder aufnimmt, dessen Frontfläche zur Stellfläche der Anordnung schräggestellt ist, und wobei in dem Gehäuse durch Zwischenwände Kammern gebildet sind, dadurch gekennzeichnet,

– dass das Gehäuse (1) im wesentlichen die Form eines Würfels aufweist, dessen normalerweise der Stellfläche der Steckdosenanordnung zugewandte Seite als offener überstehender Rand (6) ausgebildet ist und einen Stauraum (10) für ein Anschlusskabel bildet,

– dass in dem Gehäuse (1) von der genannten Stellfläche aus gesehen über den Stauraum (10) eine Abdeckung (5) liegt, die mit einem Ansatz am Einsatzteil (2) formschlüssig nach Art von Nut (17) und Feder (18) ineinandergreifend derart angeordnet ist, dass Abdeckung (5) und Einsatzteil (2) den Steckdosensockel (3) und Fehlerstromschutzschalter (4) aufnehmenden, oben liegenden Geräteraum des Gehäuses vom Stauraum (10) abtrennen,

– dass an die Abdeckung (5) eine zwischen Fehlerstromschutzschalter (4) und Steckdosensockel (3) liegende Trennwand (13) angeformt ist,

– dass der Fehlerstromschutzschalter (4) zwecks Bedienung vom Stauraum (10) her durch einen in der Abdeckung (5) angeordneten Klappdeckel (15) zugänglich ist

– und dass die den Fehlerstromschutzschalter
(4) zugewandten Seiten der Wände des Gehäuses
(1), der Trennwand (13) und/oder der Abdeckung
(5) so auf die Abmessungen des Fehlerstromschutzschalters abgestimmt sind, dass er im
Passsitz federnd gehalten ist.

2. Anordnung nach Anspruch 1, dadurch gekennzeichnet, dass der Klappdeckel (15) an zurückgesetzten Rändern (25) angeformte Lagerzapfen (26) aufweist, die zum Teil von einer Überdeckung (27) mit Abstand überspannt sind, und
dass die Abdeckung (5) des Gehäuses (1) gabelförmige Aufnahmen (30) für die Lagerzapfen (26)
aufweist, deren randseitiger Gabelarm (29) im
Ausmass der Dicke (31) der Überdeckung (27)
verkürzt ist.

3. Anordnung nach Anspruch 1, dadurch gekennzeichnet, dass der Klappdeckel (15) sich im
geöffneten Zustand an einem den Stauraum (10)
begrenzenden Gehäuserand (6) abstützt.

4. Anordnung nach Anspruch 2, dadurch gekennzeichnet, dass auf jedem Lagerzapfen (26)
eine Drehfeder (32) mit entgegengesetzt wegstehenden Anschlagsenden (33, 34) aufgesetzt ist
und dass jeweils ein Anschlagsende (33) am
Klappdeckel (15) und ein Anschlagsende (34) an
der Abdeckung (5) unter Vorspannung ansteht.

5. Anordnung nach Anspruch 2, dadurch gekennzeichnet, dass zwischen Lagerzapfen (26)
und lagerseitigem Rand des Klappdeckels (15)
eine Rippe (37) der Abdeckung (5) eingreift, die
sich vom Ende des Lagerzapfens (26) bis zur Auflagestelle (35) am Klappdeckel (15) des Anschlagsendes (33) der Drehfeder (32) erstreckt.

6. Anordnung nach Anspruch 1, dadurch gekennzeichnet, dass das Einsatzteil (2) hinsichtlich
seiner Frontfläche um 10 bis 30° von der Gehäuseoberseite aus zurückfluchtend schräggestellt
ist.

7. Anordnung nach Anspruch 6, dadurch gekennzeichnet, dass das Einsatzteil (2) um 15°
schräggestellt ist.

8. Anordnung nach Anspruch 1, dadurch gekennzeichnet, dass der Klappdeckel (15) aus
durchsichtigem Material ausgebildet ist.

9. Anordnung nach Anspruch 1, dadurch gekennzeichnet, dass im Anschlussbereich des Fehlerstromschutzschalters (4) in der Trennwand (13)
und in der Abdeckung (5) Ausnehmungen (22)
ausgebildet sind, die zusammen einen Labyrinthpfad für die Anschlussleitung (8) bilden.

**Claims**

1. Plug socket arrangement with which the supply lines to the one or more than one plug socket
are protected by a fault current protective circuit
breaker (4) fitted in the same housing with the one
or more than one plug socket, wherein the housing
(1) receives an insert (2) in at least one side wall,
in form-locking manner like a tongue and groove,
this insert constructed as a plug socket cover, with
the front surface inclined at an angle to the mounting face of the arrangement, and wherein chambers are formed in the housing by intermediate
walls, characterised in that

– the housing (1) has substantially the form of
a cube, the side of which normally facing the
mounting face of the plug socket arrangement is
constructed as an open projecting edge (6) and
forms a storage space (10) for a connecting cable,

– in that in the housing (1), seen from the above-
mentioned mounting face, a cover (5) lies over the
storage space (10), this cover being arranged with
an attachment on the insert (2) interlocking in
form-locking manner like a kind of groove (17) and
tongue (18), so that the cover (5) and the insert (2)
receiving the plug socket (3) and the fault current
protective circuit breaker (4) separate the apparatus space of the housing, which lies on top, from
the storage space (10),

– in that there is formed on the cover (5) a
dividing wall (13) between the fault current protective circuit breaker (4) and the plug socket (3),

– in that for the purpose of servicing, the fault
current protective circuit breaker (4) is accessible
from the storage space (10) by means of a hinged
cover (15) arranged in the cover (5),

– and in that the sides of the walls of the housing
(1) facing the fault current protective circuit
breaker (4), of the dividing wall (13) and/or the
cover (5) are so adapted to the dimensions of the
fault current protective circuit breaker that it is
flexibly held in a press fit.

2. Arrangement according to claim 1, characterised in that the hinged cover (15) has, moulded
on its set-back edges (25), pivot pins (26) which
are partly tensioned by a spaced overlap (27), and
in that the cover (5) of the housing (1) has forked
recesses (30) for the pivot pins (26), whose edge-
side fork limb (29) is shortened by the amount of
the thickness (31) of the overlap (27).

3. Arrangement according to claim 1, characterised in that the hinged cover (15) is supported
in the open state on a housing edge (6) which
delimits the storage space (10).

4. Arrangement according to claim 2, characterised in that on each pivot pin (26) there is a
torsion spring (32) with oppositely extending stop-
ends (33, 34) and in that in each case one stop-end
(33) abuts the hinged cover (15) and one stop-end
(34) abuts the cover (5) under pretension.

5. Arrangement according to claim 2, characterised in that between the pivot pin (26) and the
mounting-side edge of the hinged cover (15) there
engages a rib (37) of the cover (5) which extends
from the end of the pivot pin (26) to the support
point (35) on the hinged cover (15) of the stop-end
(33) of the torsion spring (32).

6. Arrangement according to claim 1, characterised in that the insert (2) is set at an angle of 10
to 30° with respect to its front face in alignment
from the top of the housing.

7. Arrangement according to claim 6, characterised in that the insert (2) is set at an angle of 15°.

8. Arrangement according to claim 1, characterised in that the hinged cover (15) is made of
transparent material.

9. Arrangement according to claim 1, characterised in that in the connection area of the fault current protective circuit breaker (4) in the dividing wall (13) and in the cover (5), recesses (22) are formed which together form a labyrinthine path for the connection line (8).

## Revendications

1. Dispositif de prise de courant où les conducteurs d'amenée du courant à une ou plusieurs prises de courant femelles sont protégés par un disjoncteur de courant de fuite (4) logé dans le même boîtier que la prise ou les prises, le boîtier (1) recevant dans au moins une paroi latérale, avec assemblage par complémentarité de formes, type rainure et languette, une pièce insérée (2) formant recouvrement de prise(s), dont la face frontale est inclinée sur la face par laquelle le dispositif est posé, et des cloisons définissant des compartiments à l'intérieur du boîtier, caractérisé en ce:

– que le boîtier (1) affecte essentiellement la forme d'un cube, dont le côté dirigé vers la face par laquelle le dispositif est normalement posé est un côté ouvert délimité par un bord saillant (6) et formant un compartiment (10) pour ranger un câble de raccordement;

– que le boîtier (1) contient, au-dessus du compartiment de rangement (10), vu depuis ladite face de pose, un capot de recouvrement (5) qui est disposé, en étant relié à la pièce insérée (2) par une partie protubérante au moyen d'une liaison par complémentarité de formes, type rainure (17) et languette (18), de manière que le capot (5) et la pièce insérée (2) séparent le compartiment de rangement (10) d'un compartiment appareillage situé en haut et qui reçoit le socle ou les socles de prise de courant (3) et le disjoncteur de courant de fuite (4);

– que sur le capot (5) est formé une cloison (13) située entre le disjoncteur de courant de fuite (4) et le ou les socles de prise de courant (3);

– que le disjoncteur de courant de fuite (4) est accessible pour sa commande, depuis le compartiment de rangement (10) et par un couvercle rabattant (15) monté dans le capot (15);

– et que les côtés dirigés vers le disjoncteur (4) des parois du boîtier (1), de la cloison (13) et/ou du capot (5) sont accordés aux dimensions du disjoncteur de courant de fuite (4), de manière que celui-ci soit maintenu élastiquement dans un logement ajusté.

2. Dispositif selon la revendication 1, caractérisé en ce que le couvercle rabattant (15) présente des tourillons (26) formés sur des rebords (25) disposés en retrait, qui sont partiellement entourés, à distance, par un recouvrement (27), et que le capot (5) du boîtier (1) présente des réceptions fourchues (30) pour les tourillons (26), dont la branche de fourche (29) située du côté du bord est raccourcie dans une mesure qui correspond á l'épaisseur (31) du recouvrement (27).

3. Dispositif selon la revendication 1, caractérisé en ce que le couvercle rabattant (15) s'appuie à l'état ouvert sur un bord (6) du boîtier délimitant le compartiment de rangement (10).

4. Dispositif selon la revendication 2, caractérisé en ce qu'un ressort de torsion (32) avec des extrémités d'appui (33, 34) dirigées vers l'extérieur dans des directions opposées sont disposées sur les tourillons (26) et qu'une extrémité d'appui (33) de chaque ressort est appliquée contre le couvercle rabattant (15) et l'autre extrémité (34) est appliquée avec précontrainte contre le capot (5).

5. Dispositif selon la revendication 2, caractérisé en ce qu'une nervure (37) du capot (5) pénètre entre le tourillon (26) et le bord côté montage du couvercle rabattant (15), nervure qui s'étend de l'extrémité du tourillon (26) jusqu'au point d'application (35) contre le couvercle d'une extrémité (33) du ressort de torsion (32).

6. Dispositif selon la revendication 1, caractérisé en ce que la pièce insérée (2) est disposée avec sa face frontale inclinée de 10 à 30° vers l'arrière à partir du dessus du boîtier.

7. Dispositif selon la revendication 6, caractérisé en ce que la pièce insérée (2) est inclinée de 15°.

8. Dispositif selon la revendication 1, caractérisé en ce que le couvercle rabattant (15) est en matériau transparent.

9. Dispositif selon la revendication 1, caractérisé en ce que des évidements (22), formant ensemble un parcours à labyrinthe pour la ligne de raccordement (8), sont ménagés dans la cloison (13) et le capot (5) dans la région de raccordement du disjoncteur de courant de fuite (4).

FIG 1

FIG 2

**13**

**16**

**24**

**3**

**23**

**4**

**3**

**16**

FIG 3

**3**

**3**

FIG 4

FIG 5

FIG 6

FIG 7

FIG 8

FIG 9

FIG 10